# EUROPEAN PATENT APPLICATION

(11) **EP 4 395 349 A1**
(43) Date of publication of application: **03.07.2024**
(21) Application number: 22871609.8
(22) Date of filing: 27.07.2022
(51) Int. Cl.: H04N 23/60

(54) **CAMERA CONTROL METHOD AND SYSTEM, ELECTRONIC DEVICE AND STORAGE MEDIUM**

(30) Priority: 26.09.2021 CN 202111131638
(71) Applicant: ZTE Corporation, Shenzhen, Guangdong 518057 (CN)
(72) Inventor: ZHAO, Shengyang, Shenzhen, Guangdong 518057 (CN); CHEN, Hao, Shenzhen, Guangdong 518057 (CN)
(74) Representative: Boult Wade Tennant LLP
(86) International application number: PCT/CN2022/108302
(87) International publication number: WO 2023/045551

(57) **Abstract**

Embodiments of the present application relate to the field of the Internet, and in particular relates to a camera control method, an electronic device, and a computer-readable storage medium. The camera control method comprises: receiving a control instruction for a camera sent by a virtual terminal running in a server; controlling, according to the control instruction, the camera to collect image frames, and storing the image frames in a cache queue; if the quantity of the image frames in the cache queue is greater than a preset quantity threshold, clearing a target image frame in the cache queue, where the time interval between the time stamp of the target image frame and the current time stamp is greater than a preset interval; and sending the remaining image frames in the cache queue to the server such that the server sends the received image frames to the camera hardware abstraction layer in the operating system of the virtual terminal.

## Description

### CROSS REFERENCE TO RELATED APPLICATIONS

The present application is proposed based on and claims the priority of the Chinese patent application with the application No. 2021111316385 and the filing date of September 26, 2021, the entire contents of which are incorporated herein by reference.

### TECHNICAL FIELD

Embodiments of the present application relate to the technical field of the Internet, and in particular relate to a camera control method, an electronic device and a storage medium.

### BACKGROUND

A cloud mobile phone refers to a mobile phone that applies a cloud computing technology to network terminal services and implement cloud services through a cloud server. In fact, it is a smartphone that deeply integrates network services. This type of mobile phone can achieve numerous functions through the network with its built-in system and network terminals set up by manufacturers. An operating system of the cloud mobile phone (also known as a mobile phone virtual machine) runs in the cloud and has no camera for use, which leads to the lack of a camera function in the mobile phone virtual machine, and if applications (APPs) in the mobile phone virtual machine need to use camera-related functions such as taking photos, recording videos, scanning QR codes, etc., it will not function properly.

To solve the problem that the APPs running in the mobile phone virtual machine cannot operate camera hardware, a camera redirection method is generally used, which establishes a connection between the mobile phone virtual machine and a client, and maps the client's camera to the mobile phone virtual machine for use. However, this solution is prone to affecting the real-time performance of pictures after camera redirection, thereby affecting the user experience.

### SUMMARY

An embodiment of the present application provides a camera control method. The camera control method is applied to a client and includes: receiving a control instruction for a camera sent by a virtual terminal running in a server; controlling, according to the control instruction, the camera to collect image frames, and storing the image frames in a cache queue; clearing a target image frame in the cache queue in a case that the quantity of the image frames in the cache queue is greater than a preset quantity threshold, wherein a time interval between a time stamp of the target image frame and a current time stamp is greater than a preset interval; and sending remaining image frames in the cache queue to the server such that the server sends the received image frames to a camera hardware abstraction layer in an operating system of the virtual terminal.

An embodiment of the present application further provides a camera control method. The camera control method is applied to a server, a virtual terminal runs in the server, and the method includes: sending a control instruction for a camera to a client, wherein according to the control instruction, the client controls the camera to collect image frames and store the image frames in a cache queue; clearing a target image frame in the cache queue and sending remaining image frames in the cache queue to the server in a case that the quantity of the image frames in the cache queue is greater than a preset quantity threshold, wherein a time interval between a time stamp of the target image frame and a current time stamp is greater than a preset time interval; and receiving the image frames sent by the client and sending the image frames to a camera hardware abstraction layer in an operating system of the virtual terminal.

An embodiment of the present application further provides a camera control system, including: a server and a client, wherein a virtual terminal runs in the server; the server is configured to send a control instruction for a camera to the client; the client is configured to control, according to the control instruction, the camera to collect image frames, and store the image frames in a cache queue; the client is further configured to clear, in a case that the quantity of the image frames in the cache queue is greater than a preset quantity threshold, a target image frame in the cache queue, and send remaining image frames in the cache queue to the server, wherein a time interval between a time stamp of the target image frame and a current time stamp is greater than a preset interval; and the server is further configured to send the received image frames to a camera hardware abstraction layer in an operating system of the virtual terminal.

An embodiment of the present application further provides an electronic device, including: at least one processor; and a memory in communication connection with the at least one processor, wherein the memory stores instructions that may be executed by the at least one processor; in a case that the electronic device is a client, the instructions are executed by the at least one processor to cause the at least one processor to be capable of executing the camera control method applied to the client; and in a case that the electronic device is a server, the instructions are executed by the at least one processor to cause the at least one processor to be capable of executing the camera control method applied to the server.

An embodiment of the present application further provides a computer-readable storage medium, storing a computer program, wherein the computer program, when executed by a processor, implements the camera control method applied to a client, or implements the camera control method applied to a server.

### BRIEF DESCRIPTION OF THE DRAWINGS

Fig. 1 is a schematic diagram of an application scenario mentioned in an embodiment of the present application.
Fig. 2 is a schematic flow diagram of a camera control method applied to a client mentioned in an embodiment of the present application.
Fig. 3 is a schematic flow diagram of a camera control method applied to a server mentioned in an embodiment of the present application.
Fig. 4 is a schematic diagram of a camera control system mentioned in an embodiment of the present application.
Fig. 5 is a schematic flow diagram of another camera control method mentioned in an embodiment of the present application.
Fig. 6 is a schematic structural diagram of an electronic device mentioned in an embodiment of the present application.

### DETAILED DESCRIPTION

Embodiments of the present application mainly aim to provide a camera control method, an electronic device and a computer-readable storage medium, so that the real-time performance of pictures after camera redirection can be improved, thereby improving the user experience.

In order to make the objectives, technical solutions and advantages of the embodiments of the present application clearer, the embodiments of the present application will be described in detail below in combination with the accompanying drawings. However, those of ordinary skill in the art may understand that many technical details are provided for making readers understand the present application better in the embodiments of the present application. However, even without these technical details and various changes and modifications based on the following embodiments, the technical solutions required for protection in the present application can still be achieved. The division of the following embodiments is for the convenience of description and should not constitute any limitation on specific implementations of the present application, and the embodiments can be combined with and referenced to each other without contradiction.

For the convenience of understanding the embodiments of the present application, the following briefly explains an application scenario involved in the present application first:

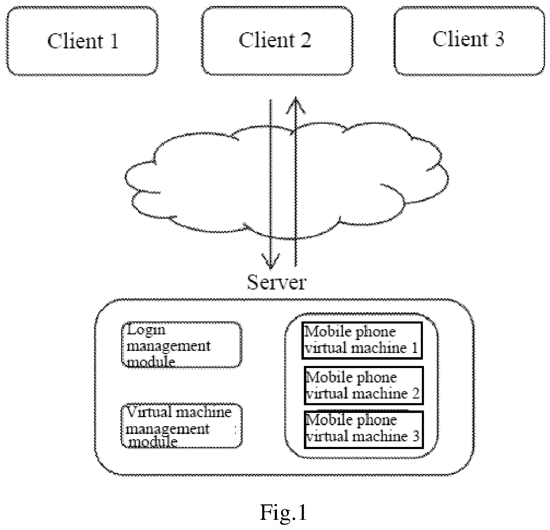

In an example, a schematic diagram of the application scenario of the embodiments of the present application may refer to Fig. 1. A cloud mobile phone system includes: clients (such as a client 1, a client 2 and a client 3 in Fig. 1) and a server. The server may include: a login management module and a virtual machine management module. Mobile phone virtual machines (such as a mobile phone virtual machine 1, a mobile phone virtual machine 2 and a mobile phone virtual machine 3 in Fig. 1) further run in the server.

The clients are configured to launch a login request to the server, the server verifies a login account, assigns a mobile phone virtual machine to a corresponding login user after the login account passes the verification and returns connection parameters of this mobile phone virtual machine to the clients, the clients may establish a link connected with the corresponding mobile phone virtual machine through the returned connection parameters, and the corresponding mobile phone virtual machine may be operated through the clients after successful connection.

The login management module, the virtual machine management module, etc. run in the server. The login management module is configured to manage user information and login verification. The virtual machine management module is configured to manage the mobile phone virtual machines, including creation, deletion, starting, stopping and the like of the mobile phone virtual machines, and may further be configured to manage running states of the mobile phone virtual machines.

The mobile phone virtual machines are independent systems running in the server, and the clients may establish connection with the mobile phone virtual machines and operate the mobile phone virtual machines through the established link. Usually, some preset modules may be further deployed on the mobile phone virtual machines, and may be used for controlling the mobile phone virtual machines.

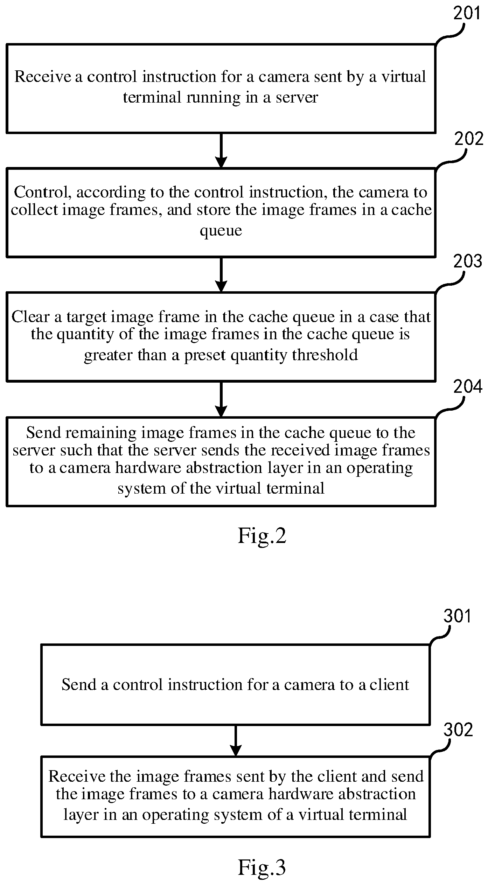

An embodiment of the present application provides a camera control method, applied to a client. The client may be the clients in the cloud mobile phone system in Fig. 1, the client may be an ordinary mobile phone device, but the client may only achieve a function of human-machine interaction when a cloud mobile phone is used. A camera (i.e., a camera device) is arranged on the client, a plurality of clients may be provided, as shown in Fig. 1, the server may be connected with the client 1, the client 2 and the client 3 at the same time, and operating systems of a plurality of mobile phone virtual machines may run on the server at the same time, and are used by the client 1, the client 2 and the client 3 respectively. A schematic flow diagram of the camera control method in the present embodiment may refer to Fig. 2, and the method includes:
step 201: a control instruction for the camera sent by a virtual terminal running in the server is received;
step 202: according to the control instruction, the camera is controlled to collect image frames, and the image frames are stored in a cache queue;
step 203: in a case that the quantity of the image frames in the cache queue is greater than a preset quantity threshold, a target image frame in the cache queue is cleared; and
step 204: remaining image frames in the cache queue are sent to the server such that the server sends the received image frames to a camera hardware abstraction layer in an operating system of the virtual terminal.

In the present embodiment, in a case that the quantity of the image frames in the cache queue is greater than the preset quantity threshold, it indicates that lots of image frames currently existing in the cache queue cannot be reported in time due to the fact that a current network state is not good, that is, a large quantity of data are accumulated in the cache queue, at the moment, the client will clear a target image frame in the cache queue, a time interval between a time stamp of the target image frame and a current time stamp is greater than a preset interval, that is to say, the target image frame is an image frame which is stored in the cache queue long ago and may be seen as expired data, that is, in the embodiment of the present application, the expired data in the cache queue may be cleared in time in a case that lots of image frames are accumulated in the cache queue. Then, the client sends the remaining image frames in the cache queue to the server such that the server sends the received image frames to the camera hardware abstraction layer in the operating system of the virtual terminal. That is to say, the client may send relatively new image frames to the server in time such that the server sends these relatively new image frames to the camera hardware abstraction layer in the operating system of the virtual terminal, which avoids the situation that image pictures have a large delay after camera redirection due to large-quantity accumulation of the image frames in the cache queue, and facilitates the improvement of the real-time performance of the pictures after camera redirection, thereby improving the user experience.

In step 201, the client may receive the control instruction for the camera sent by the virtual terminal running in the server. The virtual terminal running in the server may be the mobile phone virtual machine in Fig. 1. The camera hardware abstraction layer in the operating system of the mobile phone virtual machine may intercept a usage request for the camera from an APP running in the mobile phone virtual machine. The usage request may carry usage parameters, which may include camera parameters expected by the APP during the camera's usage, such as: a camera resolution, whether a flash is turned on, a shooting mode (such as a portrait mode, a landscape mode and a night mode), a storage address for captured images, whether to turn on a front camera or a rear camera, and a frame rate. The camera hardware abstraction layer may generate the control instruction for the camera according to the usage request carrying the usage parameters, and send the control instruction for the camera to the client.

In an example, a transmission control protocol (TCP) link is established between the client and the server, and the client and the server may transmit data through the TCP link, for example, the server may send the control instruction for the camera to the client through the TCP link.

In step 202, the client may control, according to the control instruction, the camera to collect the image frames, and store the image frames in the cache queue. The client may acquire camera usage parameters of an APP running in the mobile phone virtual machine according to the control instruction, and set the camera device, i.e., the camera, in the client according to the usage parameters, such as setting a camera resolution, whether a flash is turned on during shooting, a shooting mode (such as a portrait mode, a landscape mode and a night mode), a storage address for captured images and whether to turn on a front camera or a rear camera. After the camera device, i.e., the camera, in the client is set, image capturing may be performed, namely the image frames are collected. The client may store all the collected image frames in the preset cache queue, the image frames stored in the cache queue may all have time stamps correspondingly, and the time stamps of the image frames may be understood as time points at which the image frames are collected, or time points at which the collected image frames are stored in the cache queue.

In step 203, the time interval between the time stamp of the target image frame and the current time stamp is greater than the preset interval. The client may judge whether the quantity of the image frames stored in the cache queue is greater than the preset quantity threshold after the collected image frames are stored in the cache queue, and clear the target image frame in the cache queue in a case of determining that the quantity of the image frames in the cache queue is greater than the preset quantity threshold. The preset quantity threshold may be set according to actual demands, and is used for representing that too many image frames are stored in the cache queue at present. The inventors of the present application found that, when the network state is not good, it may be difficult to send the image frames in the cache queue to the server in time, consequently it is prone to accumulating lots of image frames in the cache queue, and the server cannot receive the newest image frames in time, which is prone to causing the delay of pictures. Therefore, in the present embodiment, by clearing the target image frame in the cache queue, namely clearing old data in the cache queue, data accumulation in the cache queue is avoided, so that an image frame at the head of the cache queue is relatively new data.

In step 204, the camera hardware abstraction layer (HAL) is located at an interface layer between a kernel and a hardware circuit of the operating system. The client sends the remaining image frames in the cache queue to the server such that the server will send the received image frames to the camera hardware abstraction layer in the operating system of the virtual terminal. For example, the client may send the remaining image frames to the server in sequence according to a sequence of the remaining image frames entering the cache queue.

In a specific implementation, the client may send the remaining image frames in the cache queue to the server through the TCP link established with the server. The server may send the received image frames to the camera hardware abstraction layer in the operating system of the virtual terminal which launches the control instruction for the camera, and then an APP running in the virtual terminal and requiring to use the camera may display camera pictures normally.

In one embodiment, after the target image frame in the cache queue is cleared, the method further includes: lowering a frame rate of the camera in a case that there are image frames in the cache queue that have not been sent to the server for a duration exceeding a preset duration. That is to say, after the target image frame in the cache queue is cleared, if the situation that there are image frames in the cache queue that have not been sent to the server for a duration exceeding a preset duration is detected, it indicates that the poor network state does not occur occasionally or in a short time, but is an inevitable objective circumstance within a period of time at present, and at the moment, the frame rate of the camera may be lowered, namely lowering the quantity of image frames displayed per second, to adapt to the objective circumstance that the current network is not good, so as to guarantee that users have good using experience.

In an example, lowering the frame rate of the camera includes: determining a sending speed of sending the image frames in the cache queue to the server; and determining a frame rate adjusting amount according to the sending speed, and lowering the frame rate of the camera according to the frame rate adjusting amount. The higher the speed of sending the image frames to the server, the relatively higher the current network speed, and the relatively better the network state. The lower the speed of sending the image frames to the server, the relatively lower the current network speed, and the relatively poorer the network state. The lower the speed of sending the image frames to the server, the larger the frame rate adjusting amount. The higher the speed of sending the image frames to the server, the smaller the frame rate adjusting amount. The frame rate of the camera after the lowering is the current frame rate minus the frame rate adjusting amount of the camera. That is to say, the lower the speed of sending the image frames to the server, the smaller the frame rate after the lowering, and the higher the speed of sending the image frames to the server, the larger the frame rate after the lowering. Optionally, a correspondence relationship between sending speeds and frame rate adjusting amounts may be pre-stored in the client, and thus the client may determine the frame rate adjusting amount according to the pre-stored correspondence relationship and the sending speed of sending the image frames to the server. It may adapt to different network states better through this frame rate adjusting manner.

In another example, lowering the frame rate of the camera may also be achieved through the following manner: lowering the frame rate of the camera with a preset stepping value, wherein the stepping value may be set as actually required, namely lowering the frame rate of the camera by the stepping value every time.

In an example, when the frame rate of the camera is lowered, the frame rate is lowered to a preset frame rate at most. That is to say, the frame rate will not be lowered without limitation, and when the frame rate is the preset frame rate, the frame rate will not be further lowered any more. By setting the preset frame rate, the lowering amplitude of the frame rate may be controlled while the frame rate is lowered to adapt to the objective circumstance that the current network is not good, and this will not cause the frame rate after the lowering to be too small, thus ensuring the coherence of picture display to a certain extent.

The preset frame rate may be set as actually required, such as being set according to the requirement of a user for coherence, if the requirement for the picture coherence is high, the preset frame rate may be set to be relatively high, and on the contrary, if the requirement for the picture coherence is low, the preset frame rate may be set to be relatively low. In a specific implementation, the preset frame rate may be set to be 20 fps, that is, the frame rate is lowered to 20 fps at most.

In one embodiment, above step 204 that the remaining image frames in the cache queue are sent to the virtual terminal running in the server includes: performing H264 encoding on the remaining image frames in the cache queue to obtain encoded image frames; and sending the encoded image frames to the virtual terminal running in the server for the virtual terminal to perform H264 decoding on the encoded image frames to obtain decoded image frames. By performing H264 encoding on the image frames, a large amount of redundant information in image frame data may be reduced, a data volume to be sent is reduced, and thus the speed of sending the image frames to the server by the client is increased, which is beneficial to improving the real-time performance of camera pictures to a certain extent.

Encoding may be soft encoding or hard encoding, soft encoding is completed by using the operation of a central processing unit (CPU), hard encoding is completed by using the operation of a graphics processing unit (GPU), and the efficiency of hard encoding is far higher than that of soft encoding. Corresponding decoding may be soft decoding or hard decoding, soft decoding is completed by using the operation of a CPU, hard decoding is completed by using the operation of a GPU, and the efficiency of hard decoding is far higher than that of soft decoding.

An embodiment of the present application further provides a camera control method, applied to a server. A virtual terminal runs in the server. The server may be the server in Fig. 1. A schematic flow diagram of the camera control method applied to the server may refer to Fig. 3, and the method includes:
step 301: a control instruction for a camera is sent to a client.

According to the control instruction, the client controls the camera to collect image frames and store the image frames in a cache queue; in a case that the quantity of the image frames in the cache queue is greater than a preset quantity threshold, a target image frame in the cache queue is cleared and remaining image frames in the cache queue are sent to the server, wherein a time interval between a time stamp of the target image frame and a current time stamp is greater than a preset interval.

In a specific implementation, when the server detects a request of calling the camera (i.e., a usage request for the camera) from the virtual terminal, the control instruction for the camera may be sent to the client according to the request of calling the camera. The request of calling the camera from the virtual terminal may be specifically a request of calling the camera from a certain APP running in the virtual terminal.

Step 302: the image frames sent by the client are received, and the image frames are sent to a camera hardware abstraction layer in an operating system of the virtual terminal.

In an example, receiving the image frames sent by the client includes: receiving encoded image frames sent by the client, wherein the client performs H264 encoding on the remaining image frames in the cache queue to obtain the encoded image frames, and performs H264 decoding on the encoded image frames to obtain decoded image frames; and sending the decoded image frames to the camera hardware abstraction layer in the operating system of the virtual terminal.

It should be noted that the above examples in the embodiment of the present application are for the convenience of understanding and do not constitute limitations on the technical solution of the present application.

It is not difficult to find that the present embodiment is an embodiment applied to the server corresponding to the above embodiment applied to the client, and the present embodiment can be implemented in conjunction with the above embodiment applied to the client. The relevant technical details and effects mentioned in the above embodiment applied to the client are still effective in the present embodiment, and in order to reduce repetition, they will not be repeated here. Correspondingly, the relevant technical details mentioned in the present embodiment can also be applied to the above embodiment applied to the client.

The step division of the above methods is only for the purpose of clear description, when implemented, the steps can be merged into one step or some steps can be split into multiple steps, and as long as the same logical relationship is included, they are within the scope of protection of this patent. Adding irrelevant modifications or introducing irrelevant designs to algorithms or processes, but not changing the core design of the algorithms and processes, is within the scope of protection of this patent.

An embodiment of the present application further provides a camera control system, including: a server and a client, wherein a virtual terminal runs in the server; the server is configured to send a control instruction for a camera to the client; the client is configured to control, according to the control instruction, the camera to collect image frames, and store the image frames in a cache queue; the client is further configured to clear, in a case that the quantity of the image frames in the cache queue is greater than a preset quantity threshold, a target image frame in the cache queue, and send remaining image frames in the cache queue to the server, wherein a time interval between a time stamp of the target image frame and a current time stamp is greater than a preset interval; and the server is further configured to send the received image frames to a camera hardware abstraction layer in an operating system of the virtual terminal.

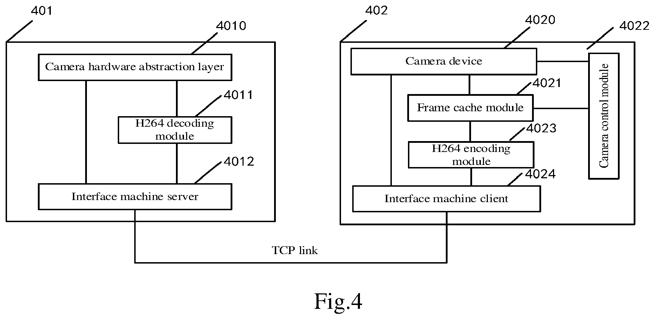

In an example, a schematic diagram of the camera control system may refer to Fig. 4, and the system includes: the server 401 and the client 402. The virtual terminal running in the server 401 includes: the camera hardware abstraction layer 4010, an H264 decoding module 4011, and an interface machine server 4012. The client 402 includes: a camera device 4020, a frame cache module 4021, a camera control module 4022, an H264 encoding module 4023, and an interface machine client 4024.

The camera hardware abstraction layer 4010 is used for intercepting an acquired usage request for the camera from an APP running in the virtual terminal (such as a mobile phone virtual machine), the usage request carries usage parameters, and the camera hardware abstraction layer 4010 converts the usage request to an instruction of controlling the camera (may also be called a control instruction for the camera), and sends the instruction to the client 402 through the interface machine server 4012 running in the mobile phone virtual machine. In a specific implementation, when the server 401 detects the usage request of the camera from the APP, a notification may be sent to the mobile phone virtual machine through an existing link between the client 402 and the mobile phone virtual machine, and then the interface machine client 4024 establishes a camera redirection data link with the interface machine server 4012.

The interface machine server 4012 is configured to issue the instruction of controlling the camera and receive the image frames sent by the client.

The H264 decoding module 4011 is configured to decode encoded image frames received by the interface machine server 4012 and inject decoded data into the camera hardware abstraction layer 4010.

The interface machine client 4024 is configured to establish a TCP link with the interface machine server 4012, receive the instruction of controlling the camera sent by the interface machine server 4012, and send H264-encoded image frames to the server.

The camera device 4020 is configured to complete camera setting and image capture according to the instruction of controlling the camera, and store captured image frames in the cache queue of the frame cache module 4021. The camera device may be understood as the camera.

The frame cache module 4021 is configured to manage and cache the image frames, the quantity of the image frames in the cache queue is large when the network is not good (i.e., determining that the quantity of the image frames stored in the cache queue is greater than the preset quantity threshold), and then old data (i.e., the above target image frame) in the cache queue are abandoned to guarantee the real-time performance of camera videos.

The camera control module 4022 is configured to manage the camera device 4020 and the frame cache module 4021 in real time according to the current network condition. In a case that the network is not good, a large amount of data will be accumulated in the cache queue, resulting in that the server cannot receive the newest frame data in time and picture delay occurs, and the camera control module 4022 detects the data volume in the cache queue and clears old data (i.e., expired data) in the cache queue in time when the quantity of cached image frames is large. When the image frames in the cache queue still cannot be sent in time for a long time, a frame rate of the camera will be lowered, thereby avoiding large-quantity accumulation of the image frames, and guaranteeing the real-time performance of pictures after camera redirection.

The H264 encoding module 4023 is configured to acquire the image frames from the frame cache module 4021, perform H264 encoding, and send the encoded data to the server through the interface machine client 4024.

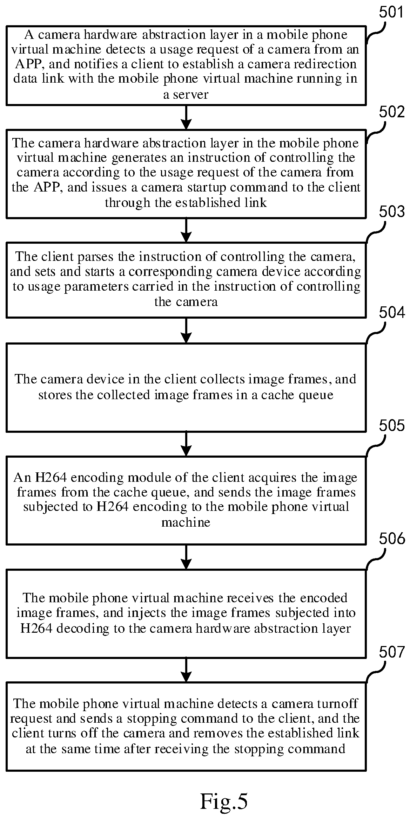

In an example, with the camera control system shown in Fig. 4, a camera control method may refer to Fig. 5, including:
step 501: the camera hardware abstraction layer in the mobile phone virtual machine detects the usage request of the camera from the APP, and notifies the client to establish the camera redirection data link with the mobile phone virtual machine running in the server.

For example, by adding an interception function in the camera hardware abstraction layer, when the usage request of the camera from the APP is detected, a notification is immediately sent to the client through a connection link between the client and the mobile phone virtual machine, and the camera redirection data link with the interface machine server is established by the interface machine client.

Step 502: the camera hardware abstraction layer in the mobile phone virtual machine generates the instruction of controlling the camera according to the usage request of the camera from the APP, and issues a camera startup command to the client through the established link.

The instruction of controlling the camera carries the usage parameters of the camera. The camera hardware abstraction layer may also acquire camera operation parameters from an application layer APP and then convert these parameters to corresponding instructions to be issued to the client, and the client is used for actually completing the operation of the camera.

Step 503: the client parses the instruction of controlling the camera, and sets and starts the corresponding camera device according to the usage parameters carried in the instruction of controlling the camera.

Step 504: the camera device in the client collects the image frames, and stores the collected image frames in the cache queue.

The camera device which is normally started will output picture data of each frame according to the set frame rate, and the client will acquire these image frames regularly and store the image frames in the cache queue. When the image frames are stored in the frame cache queue, the camera management module will judge the data volume accumulated in the cache queue at present, and will clear expired data (i.e., the above target image frame) in a case that the accumulated data volume is large. When the image frames cannot be sent in time for a long time, the frame rate of the camera will be lowered, thereby guaranteeing the real-time performance of camera pictures after camera redirection.

Step 505: the H264 encoding module of the client acquires the image frames from the cache queue, and sends the image frames subjected to H264 encoding to the mobile phone virtual machine.

Step 506: the mobile phone virtual machine receives the encoded image frames, and injects the image frames subjected into H264 decoding to the camera hardware abstraction layer.

The decoded data are injected into the camera hardware abstraction layer in the operating system of the mobile phone virtual machine, and then the APP running in the mobile phone virtual machine can display camera pictures normally.

Step 507: the mobile phone virtual machine detects a camera turnoff request and sends a stopping command to the client, and the client turns off the camera and removes the established link at the same time after receiving the stopping command.

The camera turnoff request from the APP may also be captured in the camera hardware abstraction layer of the mobile phone virtual machine, an instruction of turning off the camera may also be issued to the client through the interface machine server, and after receiving the turnoff instruction, the client turns off the camera and removes the camera redirection data link with the mobile phone virtual machine at the same time.

In the present embodiment, first, the camera management module is introduced, when the network is not good and lots of image frames cannot be reported in time and are accumulated in the cache queue, the camera management module is responsible for clearing the expired data in the cache queue in time, and if the image frames cannot be sent in time for a long time, the frame rate of the camera will be adjusted to avoid the situation that the accumulation of the image frames causes a large delay of the camera pictures after camera redirection, thereby guaranteeing the real-time performance of the camera pictures. Second, the image frames are encoded through H264 encoding, a large amount of redundant information in the image frames is reduced, a data volume to be sent is reduced, and the stability of redirected pictures is improved. Through the two above improvements, a bandwidth occupied by sending can be reduced, and good user experience can still be guaranteed in a case that the network is not good.

It is not difficult to find that the present embodiment is a system embodiment corresponding to the above embodiment applied to the client and the above embodiment applied to the server, and the present embodiment can be implemented in conjunction with the above embodiment applied to the client and the above embodiment applied to the server. The relevant technical details and effects mentioned in the above embodiment applied to the client and the above embodiment applied to the server are still effective in the present embodiment, and in order to reduce repetition, they will not be repeated here. Correspondingly, the relevant technical details mentioned in the present embodiment can also be applied to the above embodiment applied to the client and the above embodiment applied to the server.

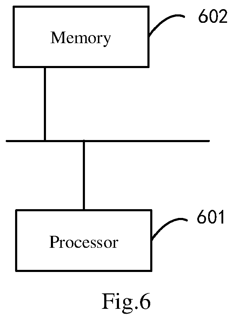

An embodiment of the present application further provides an electronic device, as shown in Fig. 6, including: at least one processor 601; and
a memory 602 in communication connection with the at least one processor 601, wherein the memory 602 stores instructions that may be executed by the at least one processor 601; in a case that the electronic device is a client, the instructions are executed by the at least one processor 601 to cause the at least one processor 601 to be capable of executing the camera control method applied to the client; and in a case that the electronic device is a server, the instructions are executed by the at least one processor 601 to cause the at least one processor 601 to be capable of executing the camera control method applied to the server.

The memory 602 and the processor 601 are connected by a bus, the bus may include interconnected buses of any number and bridges of any number, and various circuits of one or more processors 601 and various circuits of the memory 602 are connected together by the bus. The bus may also connect various other circuits such as peripheral devices, voltage regulators, and power management circuits, which are well known in the art, and therefore are not further described herein. A bus interface provides an interface between the bus and a transceiver. The transceiver may be a single element or multiple elements, such as multiple receivers and transmitters, providing a unit for communication with various other apparatuses on a transmission medium. Data processed by the processor 601 are transmitted on a wireless medium through an antenna, and further, the antenna receives the data and transmits the data to the processor 601.

The processor 601 is responsible for managing the bus and general processing, and may also provide various functions, including timing, peripheral interfaces, voltage regulation, power management, and other control functions. The memory 602 may be configured to store data used when the processor 601 executes operations.

An embodiment of the present application further provides a computer-readable storage medium which stores a computer program. The computer program implements the above method embodiment when executed by a processor.

That is, those skilled in the art can understand that implementing all or part of the steps in the above embodiment method can be completed by instructing relevant hardware through a program, which is stored in a storage medium and includes several instructions to enable a device (such as a single-chip computer and a chip) or a processor to execute all or part of the steps of the methods described in the various embodiments of the present application. The aforementioned storage medium includes: a USB flash disk, a mobile hard disk, a read-only memory (ROM), a random access memory (RAM), a magnetic disk or an optical disk and other media that can store program codes.

Those of ordinary skill in the art can understand that the above implementations are specific embodiments implementing the present application, and in practical applications, various changes can be made in form and details without deviating from the scope of the present application.

## Claims

1. A camera control method, applied to a client, and comprising:
receiving a control instruction for a camera sent by a virtual terminal running in a server;
controlling, according to the control instruction, the camera to collect image frames, and storing the image frames in a cache queue;
clearing a target image frame in the cache queue in a case that the quantity of the image frames in the cache queue is greater than a preset quantity threshold, wherein a time interval between a time stamp of the target image frame and a current time stamp is greater than a preset interval; and
sending remaining image frames in the cache queue to the server such that the server sends the received image frames to a camera hardware abstraction layer in an operating system of the virtual terminal.

2. The camera control method according to claim 1, wherein after the clearing a target image frame in the cache queue, the camera control method further comprises:
lowering a frame rate of the camera in a case that there are image frames in the cache queue that have not been sent to the server for a duration exceeding a preset duration.

3. The camera control method according to claim 2, wherein the lowering a frame rate of the camera comprises:
determining a sending speed of sending the image frames in the cache queue to the server; and
determining a frame rate adjusting amount according to the sending speed, and lowering the frame rate of the camera according to the frame rate adjusting amount.

4. The camera control method according to claim 2 or 3, wherein when the frame rate of the camera is lowered, the frame rate is lowered to a preset frame rate at most.

5. The camera control method according to any one of claims 1 to 4, wherein the sending remaining image frames in the cache queue to the virtual terminal running in the server comprises:
performing H264 encoding on the remaining image frames in the cache queue to obtain encoded image frames; and
sending the encoded image frames to the virtual terminal running in the server for the virtual terminal to perform H264 decoding on the encoded image frames to obtain decoded image frames.

6. A camera control method, applied to a server, wherein a virtual terminal runs in the server, and the method comprises:
sending a control instruction for a camera to a client, wherein according to the control instruction, the client controls the camera to collect image frames and store the image frames in a cache queue; clearing a target image frame in the cache queue and sending remaining image frames in the cache queue to the server in a case that the quantity of the image frames in the cache queue is greater than a preset quantity threshold, wherein a time interval between a time stamp of the target image frame and a current time stamp is greater than a preset interval; and
receiving the image frames sent by the client and sending the image frames to a camera hardware abstraction layer in an operating system of the virtual terminal.

7. The camera control method according to claim 6, wherein the receiving the image frames sent by the client comprises:
receiving encoded image frames sent by the client, wherein the client performs H264 encoding on the remaining image frames in the cache queue to obtain the encoded image frames;
performing H264 decoding on the encoded image frames to obtain decoded image frames; and
sending the decoded image frames to the camera hardware abstraction layer in the operating system of the virtual terminal.

8. A camera control system, comprising: a server and a client, wherein a virtual terminal runs in the server;
the server is configured to send a control instruction for a camera to the client;
the client is configured to control, according to the control instruction, the camera to collect image frames, and store the image frames in a cache queue;
the client is further configured to clear, in a case that the quantity of the image frames in the cache queue is greater than a preset quantity threshold, a target image frame in the cache queue, and send remaining image frames in the cache queue to the server, wherein a time interval between a time stamp of the target image frame and a current time stamp is greater than a preset interval; and
the server is further configured to send the received image frames to a camera hardware abstraction layer in an operating system of the virtual terminal.

9. An electronic device, comprising: at least one processor; and
a memory in communication connection with the at least one processor, wherein the memory stores instructions that may be executed by the at least one processor;
in a case that the electronic device is a client, the instructions are executed by the at least one processor to cause the at least one processor to be capable of executing the camera control method according to any one of claims 1 to 5; and
in a case that the electronic device is a server, the instructions are executed by the at least one processor to cause the at least one processor to be capable of executing the camera control method according to any one of claims 6 to 7.

10. A computer-readable storage medium, storing a computer program, wherein the computer program, when executed by a processor, implements the camera control method according to any one of claims 1 to 5, or implements the camera control method according to any one of claims 6 to 7.
